(19) Europäisches Patentamt
European Patent Office
Office européen des brevets

(11) **EP 2 413 290 A1**

(12) **EUROPEAN PATENT APPLICATION**

(43) Date of publication:
**01.02.2012 Bulletin 2012/05**

(51) Int Cl.:
***G06T 19/00*** *(2011.01)*

(21) Application number: **10008010.0**

(22) Date of filing: **30.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Straumann Holding AG**
**4002 Basel (CH)**

(72) Inventors:
• **Heinz, Kristian**
  **12489 Berlin (DE)**

• **Rohde, René**
  **12489 Berlin (DE)**

(74) Representative: **Grünecker, Kinkeldey,**
**Stockmair & Schwanhäusser**
**Anwaltssozietät**
**Leopoldstrasse 4**
**80802 München (DE)**

Remarks:
Amended claims in accordance with Rule 137(2) EPC.

(54) **Computer-implemented method for virtually modifying a digital model of a dental restoration and a computer-readable medium**

(57)    The invention relates to a computer-implemented method for virtually modifying a digital model of a dental restoration, wherein a user selects a point on the surface of the dental restoration, wherein a sphere having the selected point as its centre is automatically displayed, wherein the user may define to add material to or remove material from the dental restoration inside the sphere to generate a modified part of the dental restoration and leaving the rest of the dental restoration unmodified, wherein the step of adding material to or removing material from the dental restoration is automatically performed in real time on a display. Further, the invention is related to a computer-readable medium having stored thereon instructions which when executed by a processor perform the method steps of the inventive computer-implemented method.

FIG. 1

EP 2 413 290 A1

**Description**

The invention relates to a computer-implemented method for virtually modifying a digital model of a dental restoration and a computer-readable medium.

In the field of dentistry wax-knife tools and interactive editing tools are known for the design of virtual dental model. Virtual wax knife tools allow to add and to remove material from a given dental model. A virtual wax-knife tool allows refinement of the dental model in order to achieve e.g. a well-fitting preparation line.

It is the object of the present invention to provide a method enabling a user to perform a virtual modelling of a digital model of a dental restoration.

This object is achieved with a computer-implemented method according to claim 1 and with a computer-readable medium according to claim 9. Preferred embodiments of the invention are disclosed in the dependent claims.

A computer-implemented method for virtually modifying a digital model of a dental restoration comprises steps of selecting, by a user, a point on the surface of the dental restoration, automatically displaying a sphere having the selected point as its centre, selecting, by the user, to add material to or remove material from the dental restoration inside the sphere to generate a modified part of the dental restoration and leaving the rest of the dental restoration unmodified, wherein the step of adding material to or removing material from the dental restoration is automatically performed in real time on a display.

By selecting a point on the surface of the dental restoration the user can select a position on the surface around which he considers a modification to be relevant. The displayed sphere having the selected point as its centre indicates the volume inside which the modification of the dental restoration may take place. During a modification, the shape of the surface and accordingly the body (i.e. the volume and therewith the amount of material) of the dental restoration will change.

A selection of a point on the surface of the dental restoration may be performed by a mouse click by the user on a desired position of the displayed surface of the dental restoration.

Another possibility for selecting a point on the surface of the dental restoration may be given in that the user may select x-y-coordinates of points of the displayed dental restoration, wherein the x-y-coordinates e.g. may be listed in a list, displayed in a menu or the like. The user may also type in a desired x-y-coordinate, e.g. by means of a keyboard, at a designated part of the display of the displayed dental restoration or at an additionally provided designated part.

By selecting a point either by means of a mouse click or by entering its x-y-coordinates, so far no information about the location of the point on the surface of the dental restoration is provided as the three-dimensional digital model of the dental restoration is displayed in only two dimensions.

A buffer, a so-called z-buffer or depth buffer, may be provided wherein the z-coordinate of a pixel comprising the selected point may be stored and may represent the depth of the pixel. The depth defines which pixel is next to an observer of the display. The buffer may be arranged as a two-dimensional array (x-y) with one element for each pixel.

Thus, by selecting a point in the two-dimensional representation and using the buffer information, i.e. the depth of a pixel, the point will be located on the surface of the dental restoration. This allows a quick result for automatically displaying a sphere having the selected point as its centre.

In general, the volume of the sphere contains a part of the dental restoration which will consist of material, and further, said volume may contain a part where no part (i.e. no material) of the dental restoration is present.

The radius of the sphere, i.e. the size of the sphere, may be defined by default or a user may define a value of the radius by its own. The default value of the radius may be 2.5 mm, 2 mm, 1.5 mm or may be larger or smaller and may also have values in between these value regions.

Another option for defining the radius of the sphere is to automatically define a radius in case the default value of the radius or the value of a user defined radius would have such a size that e.g. the preparation line or some other region/volume excluded from modification would be influenced by the planned modification (i.e. when the default radius or the user defined radius would be taken for the radius of the sphere). The automatically defined radius may have a value such that the extent of the sphere would not reach into the region/volume excluded from modification. An alert may be indicated, for example, in a user interface, that the default value of the radius or the user defined radius have not been accepted but that an automatically defined radius value is used.

Instead of automatically defining a new radius for a sphere in which a modification of the surface of a dental restoration may take place, the sphere (with the default radius or the user defined radius) extending into a region/volume excluded from modification may be coloured in red (or a colour being different from the colour used in normal operation) and/or highlighted to indicate that the default radius or the value of the user defined radius would have such a size that a region/volume excluded from modification would be influenced by the planned modification. By this indication the user is enabled to easily realise that a modification in the area defined by the sphere is not allowed. Then the user may change the position of the centre of the sphere and/or may change the radius of the sphere.

The surface of the dental restoration of the digital model may be described by finite element triangles, wherein these triangles may additionally be used to indicate areas on the surface of the dental restoration which are allowed to be modified and such areas which are excluded from modification. Such an indication may be performed by displaying the triangles in different colours (the edges of the triangle and/or the whole triangle area) and/or different shading for allowed or excluded areas, respectively. It is possible to display the finite element triangles with said indications on the complete dental restoration or to display only those triangles that lie inside (the triangles do not have to lie completely within the sphere but at least with some part of the triangle) a sphere selected for virtually modifying a dental restoration.

By automatically performing the step of adding material to or removing material from the dental restoration in real time on the display, time consuming waiting times may be prevented and the user can see immediately if the modifications of the dental restoration may result in a modified dental restoration which would fit required conditions. Such conditions may be providing an occlusal surface of the dental restoration comprising one or more fissures at desired positions on the surface.

The method further comprises the steps of defining a radius of the sphere and a strength of adding material to or removing material from the dental restoration, wherein the definition is performed by the user. It is also possible that some default values are available that may be used for the radius and/or the strength, respectively.

The radius of the sphere defines the extent of an area which results of the cross section of the sphere with the surface of the dental restoration. The border line of the area and thus the border line of the cross section are defined by the surface of the sphere. Depending on the shape of the surface of the dental restoration the projection of the cross section will in general not be circular as the surface of the dental restoration may be curved, possibly comprising flat portions.

It is possible that an alert may be indicated, for example on a user interface and/or on an interface that depicts the digital model of the dental restoration to be modified, e.g. when the centre and/or the radius of a sphere are selected/defined in such a way that a region/volume of the dental restoration that is not allowed to be modified, e.g. the preparation line, would be influenced.

The strength of adding material to or removing material from the dental restoration may be defined by the user or may be defined by default. E.g. a fixed value may be defined for all of the points on the surface of the dental restoration inside the sphere or some function for the strength may be defined. Such a function may be dependent on the distance of a point on the surface of the dental restoration inside the sphere and the centre of the sphere. This may result in a modification of the surface of the dental restoration that is stronger near the centre of the sphere than near the circumference of the sphere.

Adding material to or removing material from the dental restoration may be performed for each point on the surface of the dental restoration inside the sphere as a function dependent on the distance of each point with respect to the centre of the sphere, wherein a shifting is performed along a direction defined by the normal vector of the surface of the dental restoration at the centre of the sphere, or wherein shifting is performed along a direction defined by the direction between the centre of the sphere and a point on the surface of the sphere, wherein said point is selected by the user.

The adding and removing may be performed in such a way (e.g. by using a continuous or smooth distance depending function) that the resulting shape is smooth in the sense that no steps or angled surfaces are created. The adding or removing of material can be done such points intersected by the sphere are not shifted while points inside the sphere are shifted or the points intersected by the sphere are shifted only less than 1/100 or 1/1000 times the distance as the centre point of the sphere is shifted.

When the shifting is performed along a direction defined by the direction between the centre of the sphere and a point on the surface of the sphere, wherein said point is selected by the user and when a plurality of points on the surface of the sphere are selected by the user, e.g. by selecting one point and then dragging a line along a path defined by the user, the method may enable displaying in real time, for each of the plurality of selected points, a respective shifting of each point on the surface of the dental restoration inside the sphere.

This enables the user to see immediately the result of his planned modification. For example by switching between two points on the surface of the sphere, i.e. alternately selecting of these two points, the user can easily compare two modifications which can result in an optimized and thus well fitting dental restoration.

Another possibility to define a direction along which a shifting may be performed is to calculate an average value of all the normal vectors of the surface points of the dental restoration which are inside a second sphere, for example inside a so-called double sphere having a radius twice the size of the radius of the sphere inside which the modifying of the digital model of the dental restoration should be performed.

Instead of using a double sphere, it is also possible to use a second sphere having a radius which is larger or smaller than the one of the double sphere.

Thus, the radius of the second sphere may have a size in between the radius of the double sphere and the radius of the normal (single radius) sphere (i.e. the sphere inside which the modification of the surface of the dental restoration will be performed). Further, it is also possible that the radius of the second sphere may have the size of the radius of the normal (single radius) sphere (i.e. the second sphere is identical to the normal (single radius) sphere). Moreover, it is possible that the radius of the second sphere has a size smaller than the size of the radius of the normal (single radius) sphere.

In another embodiment, it is possible that the shifting of each point on the surface of the model inside the sphere may also be performed along the respective direction defined by the normal vector of the surface at each point, i.e. one of each of the points has its own direction for shifting, wherein this direction is given by the normal vector of the surface at the position of this one point.

A function for the shifting may be given by:

$$s = d/|d| * f * exp(-(b-a)^2)/(|r|/2)^2) ,$$

wherein b is a three dimensional vector defining the centre of the sphere, f is the strength of the adding material to or removing material from the dental restoration, a is a three dimensional vector defining a point on the surface of the dental restoration inside the sphere, r is a three dimensional vector defining the radius of the sphere and d is a three dimensional vector defining the vector which is defining a three dimensional direction of shifting ("*" stands for the mathematical operation of a multiplication).

By using this function, the user can define a direction in which points on the surface of the dental restoration should be shifted. This may be advantageous in case a user sees that a shifting of the points in a direction to a left upper corner of the dental restoration may result in an optimised dental restoration. Otherwise, it may be possible that the direction of shifting may be given by the normal vector of the surface of the dental restoration at the centre of the sphere. This normal vector may be calculated automatically.

The method further comprises that an amount of material to be added to or to be removed from the dental restoration may be automatically calculated and indicated, wherein the indication may be given on a user interface and/or on an interface that depicts the digital model of the dental restoration to be modified.

The step of automatically performing the step of adding material to or removing material from the dental restoration in real time on a display further may comprise storing x and y coordinates of a pixel of the display and a z coordinate of said pixel, representing the depth of said pixel, in one buffer.

The z coordinate defines which pixel is in front or behind another pixel. Thus the two dimensional display has some three dimensional information.

The sphere may be displayed in a transparent manner or in a colour shade different from a colour of the dental restoration and/or the digital model, thus that the shape of the dental restoration is still visible in total and that the user is also provided with the information on which part of the dental restoration his changes will have influence.

Further, the invention is related to a computer-readable medium having stored thereon instructions which when executed by a processor performs the above-identified the method steps.

A high flexibility can be achieved as all modifying operations may be cancelled or made again in real time at each possible step of the modifying process. Thus, it is possible to easily perform alternative modelling drafts, access a draft at a later state and change a current daft quickly.

Preferred embodiments of the invention will be illustrated with reference to the enclosed figures. In the figures:

Figure 1 shows a schematic view of a display displaying a digital model of a dental restoration and a user interface;

Figure 2a shows shifting of points inside a sphere in a direction defined by the normal vector of the surface of the dental restoration at the centre of the sphere;

Figure 2b shows shifting of points inside a sphere in a direction defined by the direction between the centre of the sphere and a selected point on the surface of the sphere;

Figures 3a shows an exemplary modification of a part of the dental restoration, wherein the surface comprises contour lines;

Figure 3b shows another exemplary modification of the part of the dental restoration, wherein the surface comprises contour lines;

Figure 4a shows a side view of a half-sphere together with the shifted surface when shifting along the direction of the normal vector;

Figure 4b shows the shifted surface when a plurality of centres of spheres have been selected along a path;

Figure 4c shows a side view of a half-sphere together with the shifted surface when shifting along the direction between the centre of the sphere and a point on the surface of the sphere; and

Figure 4d shows the shifted surface when a plurality of centres of spheres have been selected along a path.

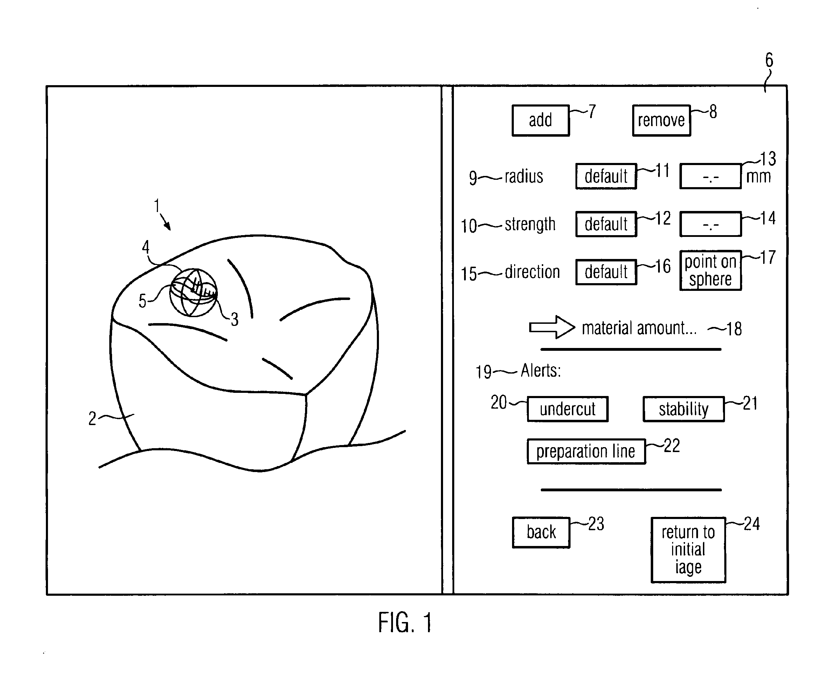

Figure 1 depicts a schematic representation of a digital model 1 of a dental restoration 2. In this case, a dental crown is depicted, however, the dental restoration 2 may also be a bridge, an abutment, an implant post, an inlay, an onlay, a veneer, a partial crown.

As indicated by the cross 3, a point on the surface of the dental restoration 2 has been selected and a sphere 4 has been automatically displayed, having its centre 3 at the selected point. A part of the surface of the dental restoration 2 is defined by the cross section 5 of the surface with the volume of the sphere 4. It is an object of the present invention to modify this defined part of the surface (i.e. the cross section 5) either by adding of (digital) material to or removing (digital) material from the dental restoration 2. In the shown case material has been added to the dental restoration 2 as indicated by the smooth surface inside the sphere 4 which defines the border of the added material.

In an interface 6, various buttons are provided by means of which a user may select an option or wherein he may insert number values. E.g. the user may select if he wants to "add" 7 material to or "remove" 8 material from the dental restoration 2. The user may define the radius 9 of the sphere 4 as well as the strength 10 of the modification by defining number values by himself 13, 14. He also has the possibility the select respective default values 11, 12. In response to defining the radius 9 of the sphere 4 and the strength 10 of the adding material to or removing material from the dental restoration, the material amount 18 added or removed is automatically calculated and displayed in the interface 6.

The modification of the dental restoration 2 may be performed by shifting each point on the surface of the dental restoration 2 inside the sphere 4 as a function dependent on the distance of a point with respect to the centre 3 of the sphere. This way of shifting results in shifting values that are getting smaller from the centre 3 towards the circumference of the sphere 4.

The user may select if the shifting is to be performed in a direction defined by the normal vector 25 of the surface of the dental restoration at the centre 3 of the sphere 4 (default button 16) or if the shifting is to be performed in a direction 31 defined by the direction between the centre 3 of the sphere 4 and a selected point 28, 28', 28" on the surface of the sphere 4.

The direction of the shifting has to be associated to the fact if matter is to be added to or to be removed from the dental restoration 2. In case material should be added the direction of shifting has to point from the surface of the dental restoration 2 to the region where no material is. In case material should be removed from the dental restoration 2, the direction of shifting has to point from the surface of the dental restoration 2 to the region where material is present.

In case the modification of the dental restoration 2 would result in a dental restoration 2 not well suited for use an alert 19 may be indicated in the interface 6. As exemplary shown in the displayed interface 6 three alert buttons may exist, being related to undercut 20, stability 21, and preparation line 22 of the dental restoration 2. One or several alert buttons may be highlighted and/or may be blinking in case the dental restoration 2 after performing the modification would comprise one or more undercuts, in case the preparation line of the dental restoration would be affected by the modification and/or in case the stability of the dental restoration 2 does not fulfil predefined criteria. In the displayed digital model 1 of the dental restoration 2 the respective areas may be indicated in a different colour and may be further highlighted by blinking.

A performed modification step may be undone by the "back" 23 button, which when activated cancels the performed modification such that the dental restoration 2 looks, i.e. has the shape, as before performing the modification. It is also possible to undo a plurality of modification steps.

Further, a button "return to initial image" 24 is provided to enable a user to return to the (initial) digital model from which he started his work.

A plurality of subsequent points, i.e. points lying on a line, on the surface of a dental restoration 2 may be selected by the user, e.g. by selecting one point and then dragging a line along a desired path. Such a selection may be performed by a clicking a mouse button and the following dragging of the path may be performed by keeping the mouse click active. An end of the dragging may be achieved by releasing the mouse button. The distance (measured in space or along the surface of the digital model) between subsequent points on the desired path, i.e. centres 3 of the spheres 4, may be defined by the user or may have a default value.

The modifications of the dental restoration 2 along the desired path may become permanent after releasing the mouse button, wherein permanent means that the modification is displayed in a fixed manner, but wherein it is still possible to undo such a modification, e.g. by selecting the back button 23 of the interface 6.

In case, a further point 3 and/or a further desired path would be selected and would overlap with an already existing modification, the further modification would be performed to the already existing modification as if the existing modification would be a common surface of the dental restoration 2. This means when in this further modification material is added to the dental restoration or if material is removed from the dental restoration so far unmodified areas on the dental restoration as well as areas already modified in a former modification step would be treated the same way.

However, in case while, i.e. keeping the mouse click active, selecting a plurality of subsequent points on the surface of the dental restoration 2 and an overlap in one or several positions along the desired path exists, a modification in the one or more respective positions will be performed (after releasing the mouse button) only once. This means that in the one or more respective positions no addition of shifting values is performed.

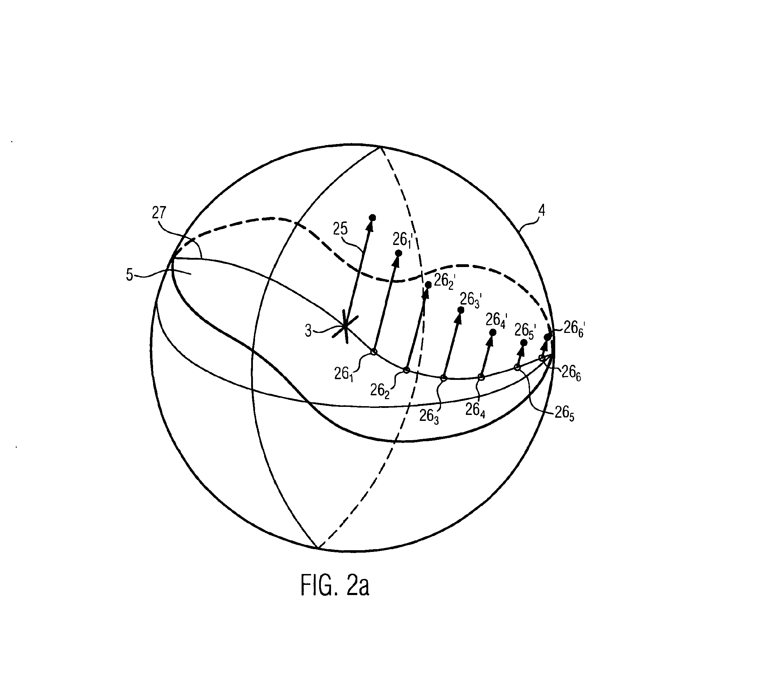

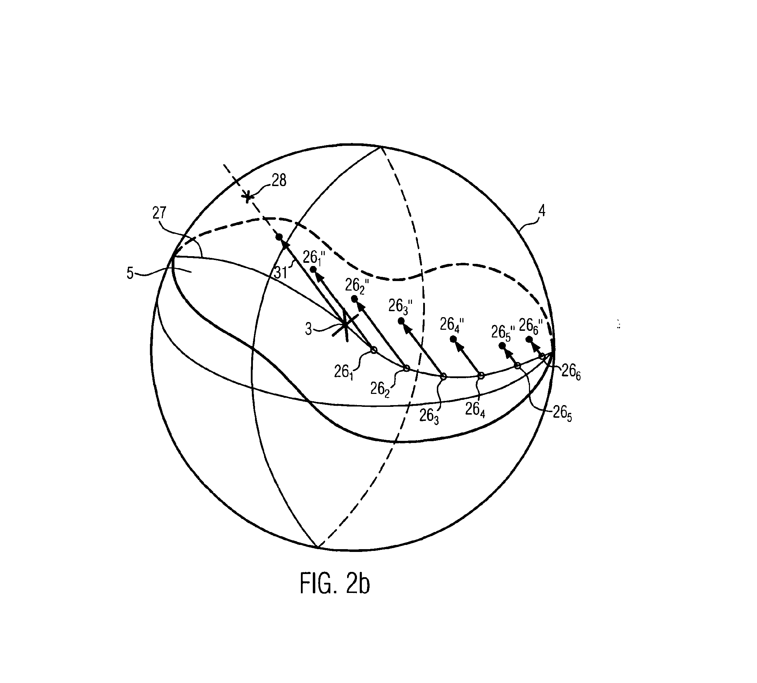

In Figures 2a and 2b depict two variants of shifting points of the surface of the dental restoration 2 inside the sphere 4.

Figure 2a shows how some points $26_1$, $26_2$, $26_3$, $26_4$, $26_5$, $26_6$ (which are located at a diameter curve 27) on the surface of the dental restoration 2 are shifted when the shifting is performed in a direction given by the normal vector 25 of the surface of the dental restoration 2 at the centre 3 of the sphere 4. The size of the shifting is larger for points $26_1$ - $26_6$ nearer to the centre 3 than for points $26_1$ - $26_6$ further away from the centre 3. This ensures a smooth change between the region where the surface of the dental restoration 2 is modified and the region where no modification takes place. The size distribution of the shifting may be given by the following function $s(a) = f * \exp(-(b-a)^2)/(|r|/2)^2)$, wherein b is the centre 3 of the sphere 4, a is a point on the surface of the dental restoration 2 and r is the radius 9 of the sphere 4 ("*" stands for the mathematical operation of a multiplication).

Figure 2b shows how some points $26_1$ - $26_6$ on the surface of the dental restoration 2 are shifted when the shifting is performed in a direction 31 given by the direction between the centre 3 of the sphere 4 and a selected point 28 on the surface of the sphere 4.

It is also possible that after a shifting of the points $26_1$ - $26_6$ has been performed, the user selects a shifted point $26_1$' - $26_6$', $26_1$" - $26_6$" and drags it in some other position. Then, automatically all the other points are shifted additionally in this new direction.

In case subsequent centres 3 of spheres 4 have been selected on the surface of the dental restoration 2, for those points that are part of two or more spheres 4 the shifting being associated to the two or more spheres 4 may be added up (in three dimensions).

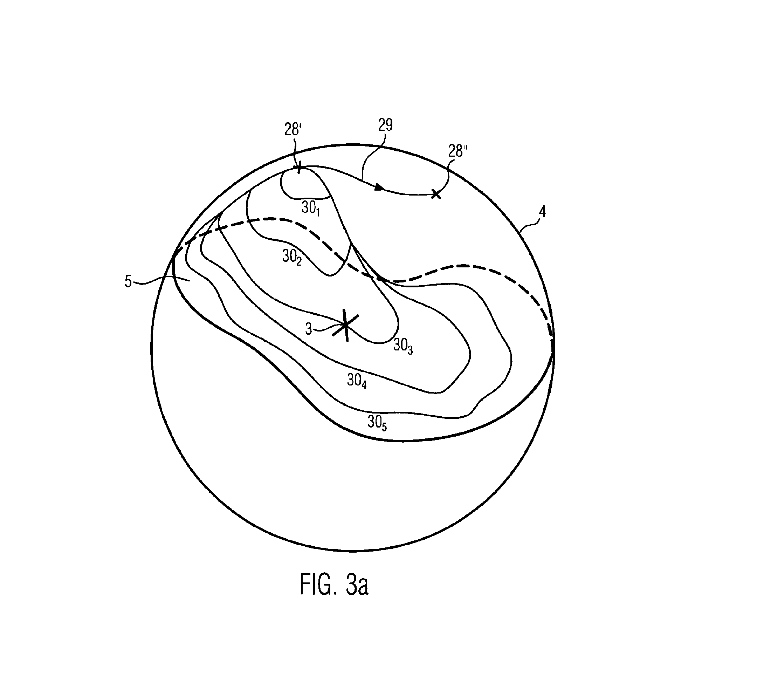

Figure 3a shows an enlarged view of the sphere 4 inside which the modification of the dental restoration 2 takes place. Indicated is the modified surface of the dental restoration 2, wherein the shape of the surface is clarified by showing five contour lines $30_1$, $30_2$, $30_3$, $30_4$, $30_5$. It is possible to use more or less contour lines for representing the shape of the shifted surface. The direction 31 of shifting was determined by a selected point 28' on the surface of the sphere 4.

The user has the possibility to vary the shape of the modified surface by dragging a line along a desired path 29, wherein a plurality of points on the surface of the sphere may be traversed. The change of the shape of the surface is shown to the user in real time such that he can immediately see what changes in the shape would result by a selection of another point on the surface of the sphere 4, i.e. a selection of another direction of shifting.

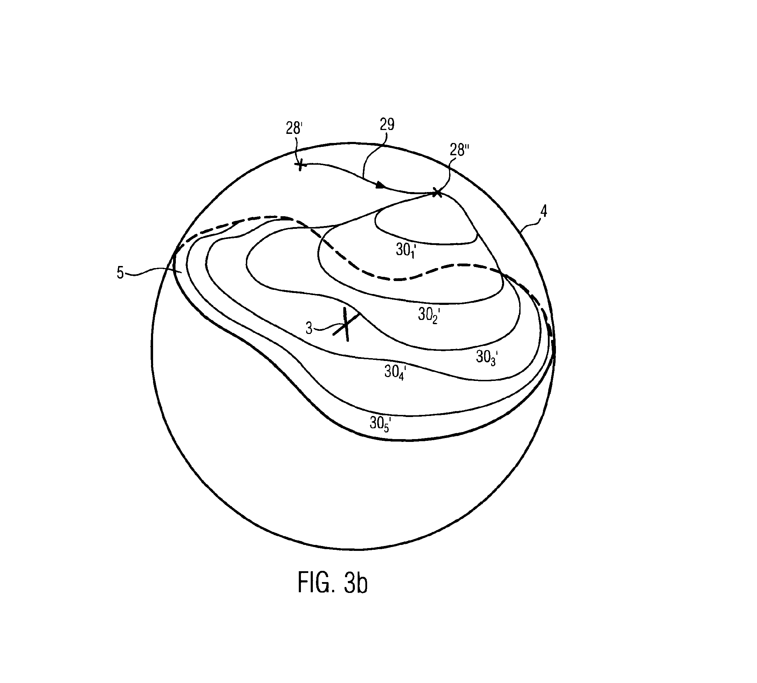

In Figure 3b, the shape of the modified surface is shown in case another point 28" on the surface of the sphere 4 is selected and thus the points $26_1$ - $26_6$ on the surface of the dental restoration 2 are shifted in along a direction defined by the direction between the centre 3 of the sphere 4 and said point 28" on the surface of the sphere 4. The shape of the shifted surface of the dental restoration 2 is indicated by five contour lines $30_1$', $30_2$', $30_3$', $30_4$', $30_5$'. The shifted surface of the dental restoration 2 varies therefore with respect to the shifted surface shown in Fig. 3a.

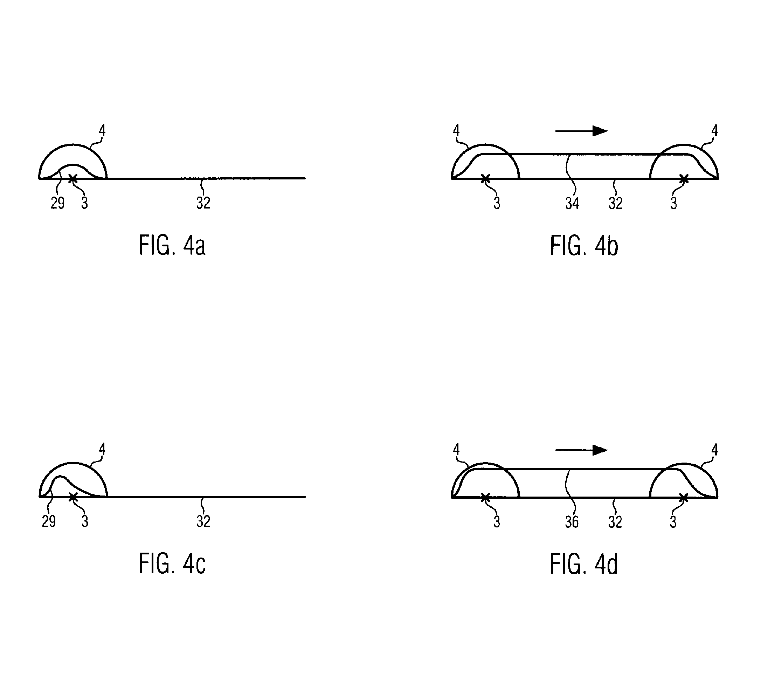

Figures 4a - 4d show in a simplified case the resulting shifted surface of a dental restoration 2 in a sectional side view when a plurality of points on the surface of the dental restoration 2 (i.e. centres 3 of spheres 4) along a path have been selected.

In the figures the (initial) surface of the dental restoration 2 to be modified is assumed to be flat and thus the path 32 along which the selected points lie is a two-dimensional line. However, in the general case the surface of the dental restoration 2 to be modified would not be flat but would have a curved shape, and thus, the path would be a three-dimensional line.

Figure 4a shows a sectional side view of a half-sphere 4 together with a side view of the shifted surface 33 when the points on the surface of the dental restoration are shifted along the direction of the normal vector of the surface of the dental restoration at the centre 3 of the sphere. The shifted surface 33 has a rotational symmetry.

In figure 4a, the path 32 is only shown as an indication. The path 32, in some sense, is generated when one point of the surface of the dental restoration is selected as a centre 3 of a sphere 4, e.g. by a mouse click, and the selection is kept active by keeping the mouse click active and moving the mouse along a desired path 32 on the surface of the dental restoration 2. At a certain distance from the first centre 3 of the first sphere 4, a second centre 3 of a sphere 4 would be established and this would repeat until the moving of the mouse along the desired path 32 stops.

In Fig. 4b the first and the last half-spheres 4 and their corresponding centres 3 are shown and the movement (of the mouse) along a desired path 32 is indicated by the arrow.

As soon as a point on the surface of the dental restoration is selected, a sphere 4 having its centre 3 at this point is displayed automatically and, as shown in the depicted example, (digital) material is added to the dental restoration 2. This addition is indicated by the shifted surface of the dental restoration 2. In the displayed example, the shifting of points of the surface of the dental restoration 2 which results from selecting a plurality of points on the surface of the dental restoration 2 as centres 3 for spheres 4, is added up for each single point in case two, three, four or more spheres overlap. In case of such an overlap a point of the surface of the dental restoration 2 will be respectively shifted two, three, four or more times, and the values of each of these two, three, four or more shifting processes are added up. This can also be seen in the sectional side view of the final surface 34 of the modified dental restoration in Fig. 4b. The slopes of the sectional view of the final surface 34 are different than the ones of surface 33 in case only one point on the surface of the dental restoration 2 has been selected. Also the maximum height of the final surface 34 is larger than the maximum height of the surface 33. This is a result of adding up of the single shifting values.

If two, three, four or more centres 3 of spheres 4 are selected, in general, it is possible that for each sphere 4 the points on the surface of the dental restoration 2 are shifted in accordance to a defined function and for each sphere 4 of the plurality of spheres 4 the performed shifting starts from the initial, i.e. unmodified, surface of the dental restoration 2. Thus, for each sphere 4 the surface of the dental restoration 2 may be shifted as shown in Fig. 4a (and Fig. 4c; see description below). The total shifting of the points inside the plurality of spheres 4 may be performed by generating an envelop to the shifted surfaces of the dental restoration 2 resulting from the shifts in each of the plurality of spheres 4. This means that a point is shifted only by the amount which corresponds to the largest shifting given by one of multiple spheres that include a point. If a point that lies three times inside a sphere would be shifted e.g. due to lying in the first sphere by 0.1 mm, due to lying in the second sphere by 0.2 mm and by lying in the third sphere by 0.3 mm it would be shifted by 0.3 mm, which corresponds to the largest of the three values. As described beforehand the shifting may also amount to 0.6 mm which is the sum of the individual shifting values.

Figures 4c and 4d show the scenario as in Figs. 4a and 4b, but in the case when shifting is performed along the direction between the centre 3 of the sphere 4 and a selected point on the surface of the sphere 4. The shifted surface 35 has no rotational symmetry. In the sectional side view of the shifted surface 35 this gets obvious as the peak of the shifted surface in Fig. 4c is displaced to the left and thus the slopes of the sectional side view of the shifted surface 35 are asymmetric. As a consequence also the slopes of the sectional view of the final surface 36 as shown in Fig. 4d are asymmetric.

## Claims

1. Computer-implemented method for virtually modifying a digital model (1) of a dental restoration (2), the method comprising the following steps:

    - selecting, by a user, a point (3) on the surface of the dental restoration;
    - automatically displaying a sphere (4) having the selected point (3) as its centre (3);
    - selecting, by the user, to add (7) material to or remove (8) material from the dental restoration inside the sphere (4) to generate a modified part of the dental restoration (2) and leaving the rest of the dental restoration (2) unmodified;
    - automatically performing the step of adding material to or removing material from the dental restoration (2) in real time on a display.

2. The computer-implemented method according to claim 1, **characterized in that** the method further comprises the steps of:

    - defining, by the user, a radius (9) of the sphere (4); and
    - defining, by the user, a strength (10) of the adding material to or removing material from the dental restoration (2).

3. The computer-implemented method according to claim 1 or 2, **characterized in that** the adding of material to or removing of material from the dental restoration (2) is performed for each point on the surface (5) of the dental restoration (2) inside the sphere (4) as a function dependent on the distance of each point with respect to the centre (3) of the sphere (4),
    wherein shifting is performed along a direction defined by the normal vector (25) of the surface of the dental restoration (2) at the centre (3) of the sphere (4), or
    wherein shifting is performed along a direction (31) defined by the direction between the centre (3) of the sphere (4) and a point (28) on the surface of the sphere (4), wherein said point is selected by the user, or
    wherein shifting is performed along a direction defined by an average value of all normal vectors of points of the surface of the dental restoration (2) which are inside a second sphere, wherein the second sphere may be a sphere identical to the sphere (4) inside which the modifying of the dental restoration (2) is to be performed or wherein the second sphere may be a double sphere having a radius twice the size of a radius (9) of the sphere (4) inside which the modifying of the dental restoration (2) is to be performed.

4. The computer-implemented method according to claim 3, **characterized in that** when the shifting is performed along a direction (31) defined by the direction between the centre (3) of the sphere (4) and a point (28) on the surface of the sphere (4), wherein said point is selected by the user and when a plurality of points (28, 28', 28") on the surface of the sphere (4) are selected by the user, e.g. by selecting one point and then dragging a line along a path (29) defined by the user, the method further comprises the step:

    - displaying in real time, for each of the plurality of selected points (28, 28', 28"), a respective shifting of each point on the surface (5) of the dental restoration (2) inside the sphere (4).

5. The computer-implemented method according to claims 3 or 4, **characterized in that** the function is given by:

$$\mathbf{s} = \mathbf{d}/|\mathbf{d}| * f * \exp(-(\mathbf{b}-\mathbf{a})^2)/(|\mathbf{r}|/2)^2) \ ,$$

wherein **b** is a three dimensional vector defining the centre (3) of the sphere (4), f is the strength (10) of the adding material to or removing material from the dental restoration (2), **a** is a three dimensional vector defining a point on the surface (5) of the dental restoration (2) inside the sphere (4), **r** is a three dimensional vector defining the radius (9) of the sphere (4) and **d** is a three dimensional vector defining the vector which is defining a three dimensional direction of shifting.

6. The computer-implemented method according to claims 1 to 5, **characterized in that** the method further comprises the steps of:

    - automatically calculating and indicating an amount of material (18) to be added to or to be removed from the dental restoration (2).

7. The computer-implemented method according to any of claims 1 to 6, **characterized in that** the step of automatically performing the step of adding material to or removing material from the dental restoration (2) in real time on a display further comprises:

    - storing x and y coordinates of a pixel of the display and a z coordinate of said pixel, representing the depth of said pixel, in one buffer.

8. The computer-implemented method according to any of claims 1 to 7, **characterized by** displaying the sphere (4) in a transparent manner or in a colour shade different from a colour of the dental restoration (2).

9. Computer-readable medium having stored thereon instructions which when executed by a processor perform the method steps of claims 1 to 8.

**Amended claims in accordance with Rule 137(2) EPC.**

1. Computer-implemented method for virtually modifying a digital model (1) of a dental restoration (2), the method comprising the following steps:

    - selecting, by a user, a point (3) on the surface of the dental restoration;
    **characterized by**
    - automatically displaying a sphere (4) having the selected point (3) as its centre (3);
    - selecting, by the user, to add (7) material to or remove (8) material from the dental restoration inside the sphere (4) to generate a modified part of the dental restoration (2) and leaving the rest of the dental restoration (2) unmodified;
    - automatically performing the step of adding material to or removing material from the dental restoration (2) in real time on a display;

    - performing the adding of material to or removing of material from the dental restoration (2) for each point on the surface (5) of the dental restoration (2) inside the sphere (4) as a function dependent on the distance of each point with respect to the centre (3) of the sphere (4), wherein shifting is performed along a direction defined by the normal vector (25) of the surface of the dental restoration (2) at the centre (3) of the sphere (4), or wherein shifting is performed along a direction (31) defined by the direction between the centre (3) of the sphere (4) and a point (28) on the surface of the sphere (4), wherein said point is selected by the user, or wherein shifting is performed along a direction defined by an average value of all normal vectors of points of the surface of the dental restoration (2) which are inside a second sphere, wherein the second sphere may be a sphere identical to the sphere (4) inside which the modifying of the dental restoration (2) is to be performed or wherein the second sphere may be a double sphere having a radius twice the size of a radius (9) of the sphere (4) inside which the modifying of the dental restoration (2) is to be performed; wherein the shifting is performed such that a resulting shape is smooth which means that no steps or angled surfaces are created.

2. The computer-implemented method according to claim 1, **characterized in that** the method further comprises the steps of:

    - defining, by the user, a radius (9) of the sphere (4); and
    - defining, by the user, a strength (10) of the adding material to or removing material from the dental restoration (2).

3. The computer-implemented method according to claim 1 or 2, **characterized in that** when the shifting is performed along a direction (31) defined by the direction between the centre (3) of the sphere (4) and a point (28) on the surface of the sphere (4), wherein said point is selected by the user and when a plurality of points (28, 28', 28") on the surface of the sphere (4) are selected by the user, e.g. by selecting one point and then dragging a line along a path (29) defined by the user, the method further comprises the step:

    - displaying in real time, for each of the plurality of selected points (28, 28', 28"), a respective shifting of each point on the surface (5) of the dental restoration (2) inside the sphere (4).

**4.** The computer-implemented method according to claims 1 to 3, **characterized in that** the function is given by:

$$s = d/|d| * f * exp(-(b-a)^2)/(|r|/2)^2) ,$$

wherein b is a three dimensional vector defining the centre (3) of the sphere (4), f is the strength (10) of the adding material to or removing material from the dental restoration (2), a is a three dimensional vector defining a point on the surface (5) of the dental restoration (2) inside the sphere (4), r is a three dimensional vector defining the radius (9) of the sphere (4) and d is a three dimensional vector defining the vector which is defining a three dimensional direction of shifting.

**5.** The computer-implemented method according to claims 1 to 4, **characterized in that** the method further comprises the steps of:

- automatically calculating and indicating an amount of material (18) to be added to or to be removed from the dental restoration (2).

**6.** The computer-implemented method according to any of claims 1 to 5, **characterized in that** the step of automatically performing the step of adding material to or removing material from the dental restoration (2) in real time on a display further comprises:

- storing x and y coordinates of a pixel of the display and a z coordinate of said pixel, representing the depth of said pixel, in one buffer.

**7.** The computer-implemented method according to any of claims 1 to 6, **characterized by** displaying the sphere (4) in a transparent manner or in a colour shade different from a colour of the dental restoration (2).

**8.** Computer-readable medium having stored thereon instructions which when executed by a processor perform the method steps of claims 1 to 7.

FIG. 1

FIG. 2a

FIG. 2b

EP 2 413 290 A1

FIG. 3a

FIG. 3b

EP 2 413 290 A1

FIG. 4b

FIG. 4d

FIG. 4a

FIG. 4c

Europäisches
Patentamt

European
Patent Office

Office européen
des brevets

# EUROPEAN SEARCH REPORT

Application Number

EP 10 00 8010

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KECHAGIAS L ET AL: "Virtual drilling - sculpturing in 3-D volumes" PROCEEDINGS OF THE 23RD. ANNUAL INTERNATIONAL CONFERENCE OF THE IEEE ENGINEERING IN MEDICINE AND BIOLOGY SOCIETY. (EMBS)., vol. 3, 25 October 2001 (2001-10-25), pages 2513-2519, XP010592166 INSTANBUL, TURKEY ISBN: 978-0-7803-7211-5 * abstract; figure 1 * Section I. introduction - Method description; Section IV. Virtual Sculpturing ----- | 1-9 | INV. G06T17/40 |
| X | LAEHYUN KIM ET AL: "Dental training system using multi-modal interface" COMPUTER-AIDED DESIGN AND APPLICATIONS CAD SOLUTIONS COMPANY LIMITED, vol. 2, no. 5, 2005, pages 591-598, XP002619314 THAILAND ISSN: 1686-4360 * abstract; figure 6 * Section 4.2 Drilling Operation ----- | 1-9 | |
| X | B RENTZEN, JAKOB ANDREAS: "Volume Sculpting: Intuitive, Interactive 3D Shape Modelling" IMM VISIONDAY, POSTER PRESENTATION, 30 May 2001 (2001-05-30), pages 1-8, XP002619315 * abstract; figures 5,7 * Section 3 CSG Operations; Section 4 Deformative Operations; 5 Interaction ----- -/-- | 1-9 | TECHNICAL FIELDS SEARCHED (IPC) G06T |

The present search report has been drawn up for all claims

| Place of search | Date of completion of the search | Examiner |
|---|---|---|
| Berlin | 31 January 2011 | Almeida Garcia, B |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 10 00 8010

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "15 Smoothing, Beveling, and Sculpting Polygons"<br>Using Maya: Polygonal Modeling, [Online]<br>1 January 1999 (1999-01-01), page 9PP,<br>XP002619316<br>Retrieved from the Internet:<br>URL:http://caad.arch.ethz.ch/info/maya/man ual/UserGuide/ModelingPoly/PolySmoothBevel .fm.html> [retrieved on 2011-01-31]<br>Section "Sculpting Polygons" and subsections | 1-9 | |
| A | WANG S W ET AL: "VOLUME SCULPTING"<br>PROCEEDINGS OF THE SYMPOSIUM ON INTERACTIVE 3D GRAPHICS,<br>9 April 1995 (1995-04-09), pages 151-156,<br>XP000546206<br>ACM, US  DOI: 10.1145/199404.199430<br>ISBN: 978-0-89791-736-0<br>* abstract *<br>Section 3 "User Interaction"; Section 4 "Carving" | 1-9 | |
| A | EP 1 241 629 A2 (MITSUBISHI ELECTRIC CORP [JP]) 18 September 2002 (2002-09-18)<br>* paragraphs [0001] - [0032] * | 1-9 | TECHNICAL FIELDS SEARCHED (IPC) |

The present search report has been drawn up for all claims

| Place of search | Date of completion of the search | Examiner |
|---|---|---|
| Berlin | 31 January 2011 | Almeida Garcia, B |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 00 8010

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2011

| Patent document cited in search report | | Publication date | Patent family member(s) | | Publication date |
|---|---|---|---|---|---|
| EP 1241629 | A2 | 18-09-2002 | JP | 2002334347 A | 22-11-2002 |
| | | | JP | 2009151754 A | 09-07-2009 |
| | | | US | 2002130856 A1 | 19-09-2002 |